Europäisches Patentamt

European Patent Office

Office européen des brevets

(11) Publication number: **0 129 060**
**B1**

# EUROPEAN PATENT SPECIFICATION

(45) Date of publication of patent specification: **12.04.89**

(21) Application number: **84105538.7**

(22) Date of filing: **16.05.84**

(51) Int. Cl.⁴: **G 09 G 1/00**

(54) Displaying and/or printing Arabic script.

(30) Priority: **17.05.83 CA 428313**

(43) Date of publication of application:
**27.12.84 Bulletin 84/52**

(45) Publication of the grant of the patent:
**12.04.89 Bulletin 89/15**

(84) Designated Contracting States:
**DE FR GB IT**

(56) References cited:
**FR-A-2 490 365**
**GB-A-1 172 553**
**US-A-4 176 974**
**US-A-4 298 773**

**IMPLEMENTING FUNCTIONS:**
**MICROPROCESSORS AND FIRMWARE,**
**EUROMICRO 1981, September 8-10, 1981,**
**pages 423-429; Paris, FR, North-Holland**
**Publishing Company, Amsterdam, NL; J.C.H.**
**PARK "Design and construction of an**
**intelligent line printer"**

(73) Proprietor: **International Business Machines**
**Corporation**
**Old Orchard Road**
**Armonk, N.Y. 10504 (US)**

(72) Inventor: **Metwaly, Mohamed Farid**
**30 Carey Crescent**
**Markham Ontario L3R 3E5 (CA)**

(74) Representative: **Atchley, Martin John**
**Waldegrave**
**IBM United Kingdom Limited Intellectual**
**Property Department Hursley Park**
**Winchester Hampshire SO21 2JN (GB)**

**Description**

This invention relates to a character generation method for use in word/text processing, displays, work stations and microcomputers, etc., that support those languages employing Arabic script.

Background of the Invention

As is well known, Arabic script is cursive and and is used in several languages, namely Arabic, Farsi and Urdu.

It is a context-sensitive script, the form or shape of characters varying in many cases in dependence upon the surrounding characters in any given line of text.

From the context sensitivity of Arabic script, and the fact that it contains many character-form variants, it is readily appreciated that the displaying or printing of such cursive script raises a significant problem in the correct selection of character forms.

Where input is effected by keyboard, the latter must either be designed to provide a key for each and every character form, or must be equipped with multi-function keys.

Any keyboard having separate keys for each form would be unduly cumbersome, while multi-function keys obviously result in a reduction of the rate at which a skilled operator can produce text. These obvious expedients also lay the onus of proper form selection on the operator.

A better approach is to provide a more less standard type of keyboard wherein the keys are marked for the basic or stand-alone form of characters, and employ logic to automatically select the appropriate form that each successive character must take.

To date, several efforts have been made to automate selection and, in the main, all appear to have focussed on a concept that is well illustrated in U.S. Patent No. 4,176,974, which issued on December 4, 1979, to W B Bishai and J H McCloskey and is entitled "Interactive Video Display and Editing of Text in Arabic Script".

The concept noted above is based on the fact that various Arabic characters have respectively different modes of interconnection. Some character forms connect with other characters from both left and right, some may connect only the right and some are of a stand-alone type connecting neither to the right nor to the left.

In accordance with Bishai et al (Column 4, Lines 54 to 59), characters that are capable of connection at both sides respective occure in four different forms:

1. independent or stand-alone (joined neither to right nor left)
2. final or end of word (joined rightwards only)
3. initial or first character in a word (joined leftwards) (Arabic is written from right to left)
4. medial, or a character between Final and Initial (joined both leftwards and rightwards)

Thus, in the prior art, the forms or shapes that each character can adopt are classified in accordance with their respective connection-states.

With reference to Bishai et al (supra), the latter, in dealing with multi-form characters within a multi-character word, initially displays each character in its "final" form. This, of course, necessitates a check of at least the preceding character, and, in the majority of cases, a re-shaping of each such character.

More specifically, Bishai et al checks the first preceding character to determine whether to display in Stand-alone or Final form. If Final form is correct, then the second preceding character must be checked to see whether the first preceding character should actually be displayed in the Initial or Medial form.

Further examples of systems or concepts similar to Bishai et al are found in U.S. Patent US—A—4,145,570 and US—A—4,298,773 (K M Diab), and also in French Patent FR—A—2,490,365 (G Kaldas).

A still further example of the above prior art concept is Canadian Patent CA—A—1,044,806, issued December 19, 1978, to Syed S Hyder (=French Patent FR—A—2,241,827). The Hyder system is similar to Bashai et al with the exception that Hyder does not immediately display a selected character. Display occurs with the keying of the next character. This is deemed to be potentially confusing for an operator since, at any given time, the operator will key one character and see a different character displayed.

Reference is made to British patent specification GB—A—1,461,413 (=French Patent FR—A—2,249,773) as another prior art system.

GB—A—1,172,553 describes a method of automatically generating characters for printing in cursive script for a context sensitive language wherein various characters may each have a number of different shapes depending upon the particular character location within a word or part of a word. The method described comprises generating a class code for each successive selected character, each class code being representative of the connectability or non-connectability of its associated character to a succeeding character.

According to the method described each character is then compared with the class codes of the immediately preceding character and the immediately following character in order to generate an output code for each character class code. It is therefore necessary to delay the output code generation process for each character until the immediately following character has been identified.

In summary, currently available concepts for the character generation of Arabic script suffer from the following drawbacks:

1. Delayed response when a succeeding character is unknown;
2. Multiple checking of preceding characters;
3. Re-shaping of each displayed character upon determining the succeeding character;
4. Inability to produce initialsf or acronyms;
5. Inability to support vowels when the latter are supported as separate characters; and
6. Inability to handle character forms that are necessarily displayable only in two adjacent dot matrices.

Brief Description of the Invention

The present invention is predicated on a new concept that calls for segregation of the characters into sets and sub-groups arranged respectively in accordance with the position a character can occupy in a word, and the respective number of variant shapes each character may have.

This new concept affords improvement, in particular, with the selection of specific forms for characters having multiple variants.

As a result of such segregation, any variant form in a group can be readily selected by virtue of the fact that only one form is appropriate for any given character position in a word.

These character positions are defined in an apparently similar, but significantly different, manner than the classifications of the prior art, as will be seen below.

For example, if one keys a character following a space, the present invention treats it as a "Beginning multi-character part" and selects the appropriate form. The next character to be keyed will then be treated as a "Middle multi-character part", and that appropriate form will be selected until the detection of a succeeding space reveals that the previous character was actually the last character of the multi-character word. Only for such last character would any re-shaping be necessary.

One other occasion for re-shaping occurs when a Beginning form is followed by a space, in which case, the form displayed would be re-shaped to Stand-alone form.

In all, re-shaping is drastically reduced and undue checking is eliminated.

It is thus a primary object of the present invention to provide a method for automatically generating Arabic script, for display, in such a manner as to reduce the incidence of re-shaping character forms, to eliminate delay in the displaying of a keyed character, and to greatly minimize the checking of preceding characters.

A further object of the present invention is to provide a method for automatically generating Arabic script that will permit the production of initials and acronyms, handle compound characters and shapes that occupy two dot matrices, as well as vowels.

The present invention relates to a method of automatically generating characters for display or printing in cursive script for a context sensitive language wherein various characters may each have a number of different shapes depending upon the particular character location within a word or part of a word comprising generating a class code for each successive selected character, each class code being representative of the connectability or non-connectability or its associated character to a succeeding character.

According to the invention the method further comprises generating an output code identifying a predicted shape for a current selected character which is dependent upon the class codes for the current selected character and its immediately preceding character, and, upon generating a class code representing a word delimiter where necessary to comply with the context sensitivity of the language, changing the output code identifying the predicted shape of the preceding character into an output code identifying the shape of the last character of a word.

A method according to the invention is distinguished from the method described in GB—A—1,172,553 in that in the latter method the output code for each character is not generated until the identity of the immediately following character is known, whereas in the former method the output code for each character is generated immediately its own identity is known, but may be changed subsequently.

It should be noted that the reduction or elimination of the checking of preceding characters is of significant importance for word or text processing applications. Word or text storage buffers can be complex and may be accessed only through text storage managers. Thus, each back-check involves a considerable amount of processing.

The present invention will be more readily understood from the following detailed description taken in conjunction with the appended drawings, wherein:

Fig. 1 is a block schematic of a text processing device embodying the invention;
Fig. 2 is a block schematic of a personal computer embodying the invention;
Fig. 3 is a block schematic of a conventional terminal controller embodying the invention;
Fig. 4—1 to 4—10 are a series of flow charts illustrating the logic employed in the realisation of the invention;
Fig. 5 illustrates a suitable keyboard layout;
Fig. 6 illustrates two examples of the syntax of Arabic words as per the invention;
Fig. 7 is a diagrammatic representation of the general logic employed in the present invention;
Fig. 8 illustrates the structure of an Arabic word as treated by the present invention.

Also introduced at this point are the following appendices:

Appendix A illustrates an Arabic character set supportable by the various machines in which the invention may be applied;

Appendix B—1 to B—5 illustrate examples showing keyed input and the step by step resultant output stemming from the use of the present invention;

Appendix C illustrates Arabic shapes or forms as grouped in accordance with the invention;

Appendix D provides a detailed classification of the character set of Appendix A.

Description of a Preferred Embodiment

The rules by or through which the present invention is implemented can be accepted by a Finite-State Machine, i.e., a concept in the Finite Automata Theory. The Finite-State Machine is a "machine" that has a number of states. It accepts an input and depending upon both such input and the machine's own state, switches to the proper state and produces the proper output. This machine can be implemented by either software or hardware.

For the purposes of this description, the software implementation will be employed.

For the solution of the problems in the automatic selection of Arabic character shapes according to the present invention, the idea is mainly to first define the structure of Arabic words in terms of the respective shapes of Arabic characters, and then to derive production rules for the words also in terms of the shapes. Since Arabic is a cursive script, it is appreciated that the shapes of the characters of any Arabic word must necessarily interconnect one with another. Essentially then, an Arabic word is constructed by a number of disjoint parts.

For purposes of clarity, the following definitions are given:

1. A Character A character of the alphabet supported on the keyboard

2. Shape (of a Character)

This is the shape or form with which a character may be represented in a word. A shape depends upon the position of the character in the word, and a character may be represented by any one of up to four variant shapes. For some characters, a single shape, respectively, may be used to represent its character in more than one position in a word.

3. Arabic Word

For the purpose of this description, an Arabic word may be defined as any gorup of Arabic characters between any two delimiters. A word may consist of one or more parts. A part of a word is one or more characters connected to each other in accordance with the rules of Arabic script.

4. Character Positions in a Word

A character may appear in any one of the following positions within a word. The letter 'P' is used to denote 'position':

$P_B$ — Beginning of a multi-character part.
$P_M$ — Middle of a multi-character part.
$P_{EW}$ — End of the last multi-character part.
$P_F$ — The last one-character part (free standing).
$P_p$ — A one-character part (other than the last part).
$P_{EP}$ — End of a multi-character part (other than the last part).

5. Dividing Character

A character that can be written at the end of "parts", i.e., doesn't join to a succeeding character.

6. Non-Dividing Character

A character than cannot be written at the end of "parts", i.e., does connect to succeeding characters.

In accordance with the above definition of "Arabic word", the function classes of characters may be defined as follows:

$S_{ND}$ — Set of non-dividing characters
$S_D$ — Set of dividing characters
$S_V$ — Set of vowels (Vowels are considered here as characters, per se, and each has two shapes).

The set $S_{ND}$, which contains most of the alphabet, can be written in the $P_B$, $P_M$, $P_{EW}$, and $P_F$ positions of an Arabic word. It has the following shape groups:

$S_{BND}$ — Set of non-dividing shapes used in the beginning of part position $P_B$
$S_{MND}$ — Set of non-dividing shapes used in the middle-of-part position $P_M$
$S_{FND}$ — Set of non-dividing shapes used in the free-standing position $P_F$
$S_{END}$ — Set of non-dividing shapes used in the end-of-word position $P_{EW}$.

The set of dividing characters, $S_D$, can be written only in the positions $P_P$ and $P_{EP}$ of an Arabic word and consists of the following shape groups:

4

$S_{FD}$ — Set of stand-alone dividing shapes that can be used in position $P_P$

$S_{CD}$ — Set of connectable dividing shapes that can be used in position $P_{EP}$.

The set of vowels, $S_V$, can be used after any of the above shapes in any of the positions. This vowel set has only the following two shape groups:

$S_{FV}$ — Set of stand-alone vowels (vowels without a hyphen), which can be used after the characters in the positiions $P_{EW}$, $P_F$, $P_P$, and $P_{EP}$

$S_{CV}$ — Set of connectable vowels (vowels on a hyphen) which can be used after the characters in the positions $P_B$ and $P_M$ only.

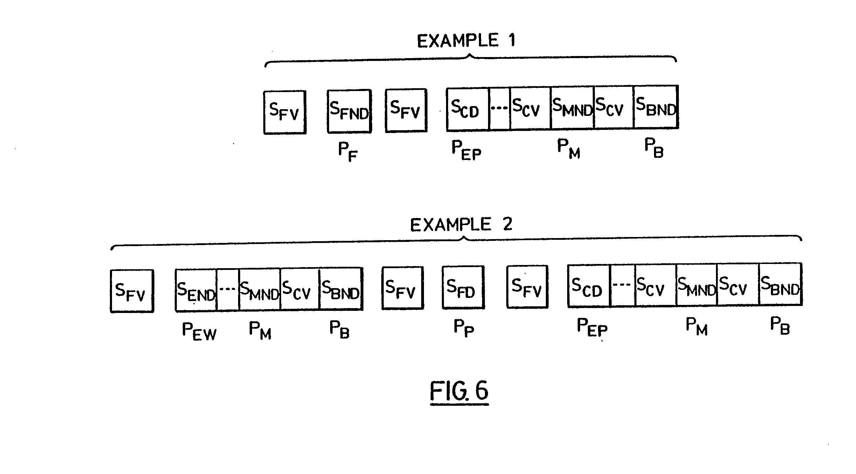

With reference to Fig 6, examples of Arabic words, having all the different positions and shapes above-defined, are given.

The production rules for writing Arabic words can be derived in terms of the above-defined groups of Arabic character shapes, using Backus-Naur form, as follows. (Recall that Arabic is written from right to left.)

$$\overset{\displaystyle\longleftarrow\text{---------}R_3\text{---------}\longrightarrow}{\text{Arabic word}:: \,=<V_F><S_{END}><\text{TEXT 1}>\mid}$$

$$\overset{\displaystyle\longleftarrow\text{--------}R_4\text{--------}\longrightarrow}{<V_F><S_{FND}><\text{TEXT 2}>\mid<V_F><\text{TEXT 2}>}$$

$$\overset{\displaystyle\longleftarrow\text{----------}R_1\text{----------}\longrightarrow}{\text{TEXT 1}:: \,=<V_C><S_{BND}>\mid<N_C><S_{BND}><\text{TEXT 2}>\mid}$$

$$\overset{\displaystyle\longleftarrow\text{--------}R_7\text{--------}\longrightarrow}{<V_C><S_{MND}><\text{TEXT 1}>}$$

$$\overset{\displaystyle\longleftarrow\text{-----------}R_5\text{-----------}\longrightarrow}{\text{TEXT 2}:: \,=\lambda\mid<V_F><S_{FD}>\mid<V_F><S_{FD}><\text{TEXT 2}>\mid}$$

$$\overset{\displaystyle\longleftarrow\text{--------}R_6\text{--------}\longrightarrow}{<V_F><S_{CD}><\text{TEXT 1}>}$$

$$V_F :: \,=\lambda\mid<S_{FV}>$$

$$V_C :: \,=\lambda\mid<S_{CV}>$$

$\lambda$ = null character

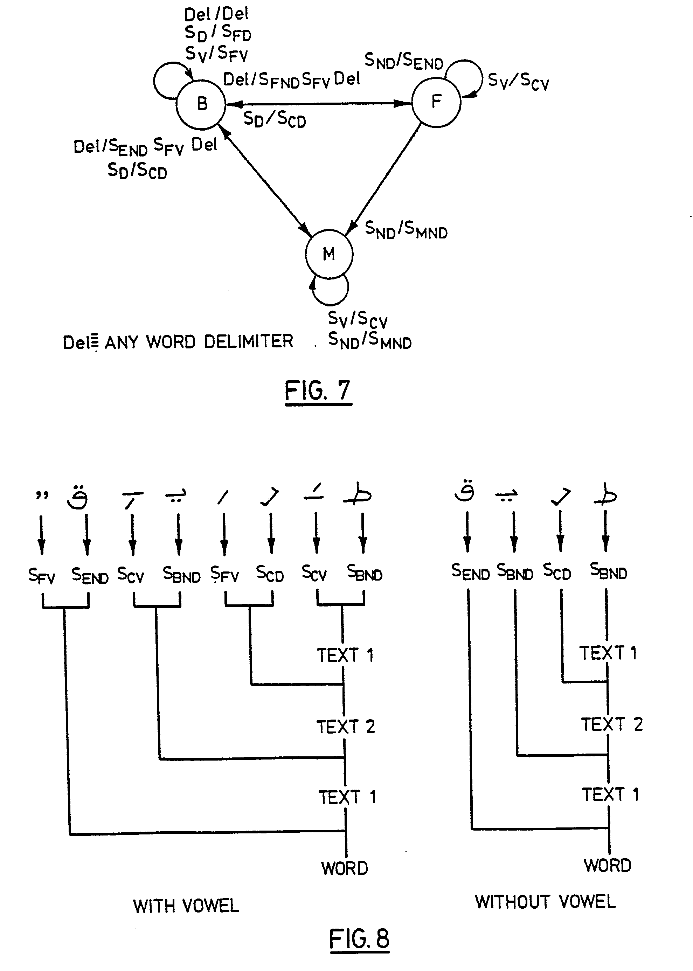

Turning to Figure 8, Arabic words are illustrated showing how they can be defined using the above rules.

These formal production rules can be restated as:

Rule 1 ($R_1$) — Display beginning-of-part shape of a non-dividing character (a) at beginning of part, or (b) after a word dividing character.

Rule 2 ($R_2$) — Display middle-of-part shape of a non-dividing character after a beginning-of-part, or a middle-of-part shape.

Rule 3 ($R_3$) — Display end-of-word shape of non-dividing character if at end of word and after beginning-of-part or middle-of-part shapes.

Rule 4 ($R_4$) — Display stand-alone shape of non-dividing character if: (a) stand-alone character, or, (b) at end of word and after a word-dividing character;

Rule 5 ($R_5$) — Display stand-alone shape of a word dividing character (or a vowel): (a) at beginnig of a part, or (b) after a word dividing character;

Rule 6 ($R_6$) — Display of connectable shape of a word dividing character (or a vowel): (a) after a beginning-of-part, or (b) after a middle-of-part.

The Finite-State machine noted hereinabove should have at least three states, namely, stand-alone (F), (from rules $R_3$, $R_4$, $R_5$ and $R_6$), middle-of-part (M), (from Rule 2), and beginning-of-part (B), (from Rule $R_1$).

Fig. 7 shows the state transition diagram of the Finite-State machine. For example, if the machine is at the beginning-of-part state (B) and a character from $S_{ND}$ is keyed, the beginning-of-part shape of this character $S_{BND}$ will be displayed. The machine will then switch to the stand-alone state (F). The next character to be keyed will determine whether the machine would go back to the beginning-of-part state (B), switch to the middle-of-part state (M), or remain in the stand-alone state (F).

If another character $S_{ND}$ is keyed, the machine will produce its middle-of-part shape, $S_{MND}$, and switch to the middle-of-part state (M). A delimiter will cause the machine to switch to the beginning-of-part state (B), reshape the preceding character from middle-of-part $S_{MND}$ to the final shape $S_{END}$, and finally produce the delimiter itself.

The above rules constitute what may be termed a first level of operation for the handling of all normal characters.

It will be understood, however, that the present implementation is expandable, and this is illustrated in respect of the additional levels incorporated to handle compound shapes and special end-of-word/stand-alone shapes.

Compound Shapes

The Arabic script has a unique shape called LAM—ALEF which is a compound shape of ALEF and LAM.

The original alphabet does not include LAM—ALEF as one of its characters, but over the years, LAM—ALEF became common usage to replace the separate characters LAM and ALEF. Conventional typewriters and keyboards support this compound shape LAM—ALEF as a single character.

With the described implementation of the present invention, the two characters, LAM followed by ALEF will always be replaced by the compound form LAM—ALEF.

By definition:

$S_L$ — Subset of $S_{ND}$ that includes LAM.

$S_A$ — Subset of $S_D$ that includes ALEF.

$S_{LA}$ — Subset of $S_D$ that includes the corresponding LAM—ALEF compound character.

$S_{BL}$ — Subset of $S_{BND}$ that has begin-of-part shapes for $S_L$.

$S_{ML}$ — Subset of $S_{MND}$ that has middle-of-part shapes for $S_L$.

$S_{EL}$ — Subset of $S_{END}$ that end-of-word shapes for $S_L$.

$S_{FL}$ — Subset of $S_{FND}$ that has stand-alone shapes for $S_L$.

$S_{LA}$ — Subset of $S_{CD}$ that has the connectable shape of $S_{LA}$.

$S_{FLA}$ — Subset of $S_{FD}$ that has the stand-alone shape of $S_{LA}$.

So, the production rules for this special case can be written as:

$$\left.\begin{array}{l} S_A \ V_C \ S_{BL} \\ \\ S_A \ V_F \ S_{FL} \end{array}\right\} \implies V_F \ S_{FLA}$$

$$\left.\begin{array}{l} S_A \ V_C \ S_{ML} \\ \\ S_A \ V_F \ S_{EL} \end{array}\right\} \implies V_F \ S_{CLA}$$

where,

$$<V_C>:: = \lambda|<S_{CV}>$$

$$<V_F>:: = \lambda|<S_{FV}>$$

This special case can be stated verbally as:

Rule 7 ($R_7$) — If Begin-of-part shape of LAM is followed by one of the ALEF shapes, replace both of them to the corresponding shape of stand-alone LAM—ALEF.

Rule 8 ($R_8$) — If Middle-of-part shape of LAM is followed in one of the ALEF shapes, replace both of them to the corresponding shape of connectable LAM—ALEF.

Special End-of-Word/Stand-Alone Shapes

The shapes of Arabic characters have different widths. Some of the shapes of some characters are actually double the width of other shapes of the same characters. However, available display terminals are provided with fixed size dot matrices and to produce an acceptable script, some shapes are necessarily produced over two dot matrices (i.e., two hex codes are required to represent these shapes). These are the end-of-word and stand-alone shapes of the Arabic characters SEEN, SHEEN, SAD and DHAD. These shapes differ in the first hex code, and share the second with the common "tail" for all of them.

Let us define:

$S_{TAIL}$ — the tail character

$S_{NA}$ — set of non-alphabetic characters (numerics, Latin, special characters, space, . . .)

$S_I$ — set of interrupt keys (cursor motion keys, ENTER, CANCEL, LF/CR . . ., etc.)

$S_S$ — Subset of $S_{ND}$ that contains these four characters (SEEN, SHEEN, SAD and DHAD)

$S_{BS}$ — Subset of $S_{BND}$ that has beginning-of-part shapes for $S_S$

$S_{MS}$ — Subset of $S_{MND}$ that has middle-of-part shapes for $S_S$

$S_{FS}$ — Subset of $S_{FND}$ that has stand-alone shapes for $S_S$ (to be used with $S_{TAIL}$

$S_{ES}$ — Subset of $S_{END}$ that has end-of-word shapes for $S_S$ (to be used with $S_{TAIL}$).

The production rule for these shapes would be:

$$T \ V_C \ S_{BS} \to T \ V_F \ S_{TAIL} \ S_{FS}$$

$$T \ V_C \ S_{MS} \to T \ V_F \ S_{TAIL} \ S_{ES}$$

6

where,

$$<T> = = = <S_{NA}>|<S_I>$$

$$<V_C> = = = \lambda|<S_{CV}>$$

$$<V_F> = = = \lambda|<S_{FV}>$$

These rules can be described as:

Rule 9 ($R_9$) — If the beginning-of-part shape of any of the characters (SEEN, SHEEN, SAD or DHAD), is followed by a word-delimiter then re-shape it to the first half of the corresponding stand-alone shape, and insert the tail character as the second half.

Rule 10 ($R_{10}$) — If the middle-of-part shape of any of the characters (SEEN, SHEEN, SAD or DHAD), is followed by a word-delimiter then re-shape it to the first half of the corresponding end-of-word shape, and insert the tail character as the second half.

In order to handle these two special cases, more states have to be added to the finite state machine. More specifically, four more states need to be added. They are:

$L_F$ — Stand-alone state for LAM (from Rule 7)

$L_M$ — Middle-of-part state for LAM (from Rule 8)

$S_F$ — Stand-alone state for SEEN, SHEEN, SAD and DHAD (from Rule 10)

$S_M$ — Middle-of-part state for SEEN, SHEEN, SAD and DHAD (from Rule 10)

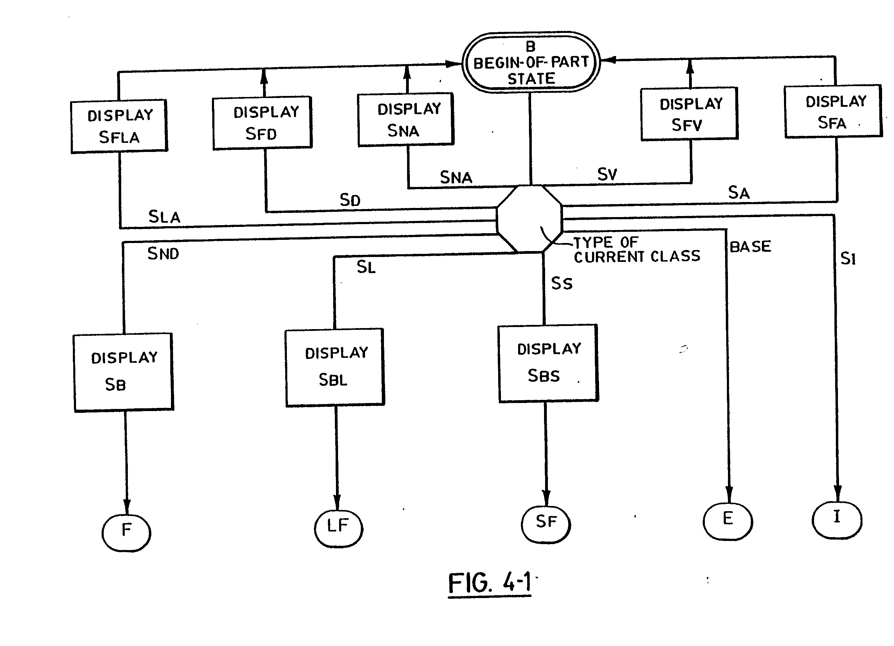

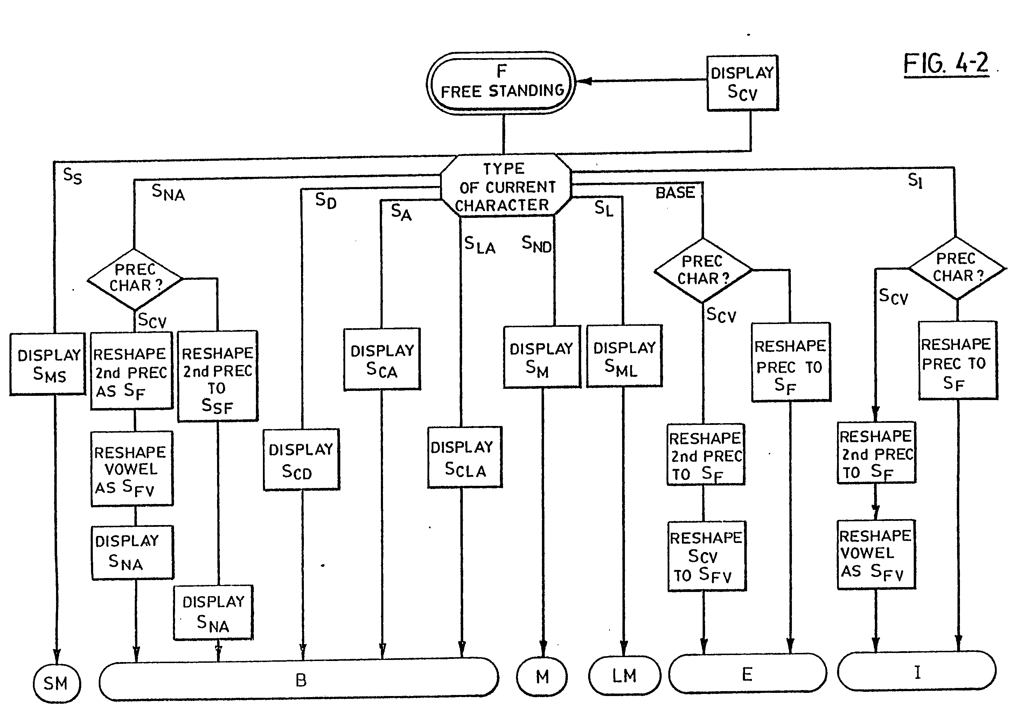

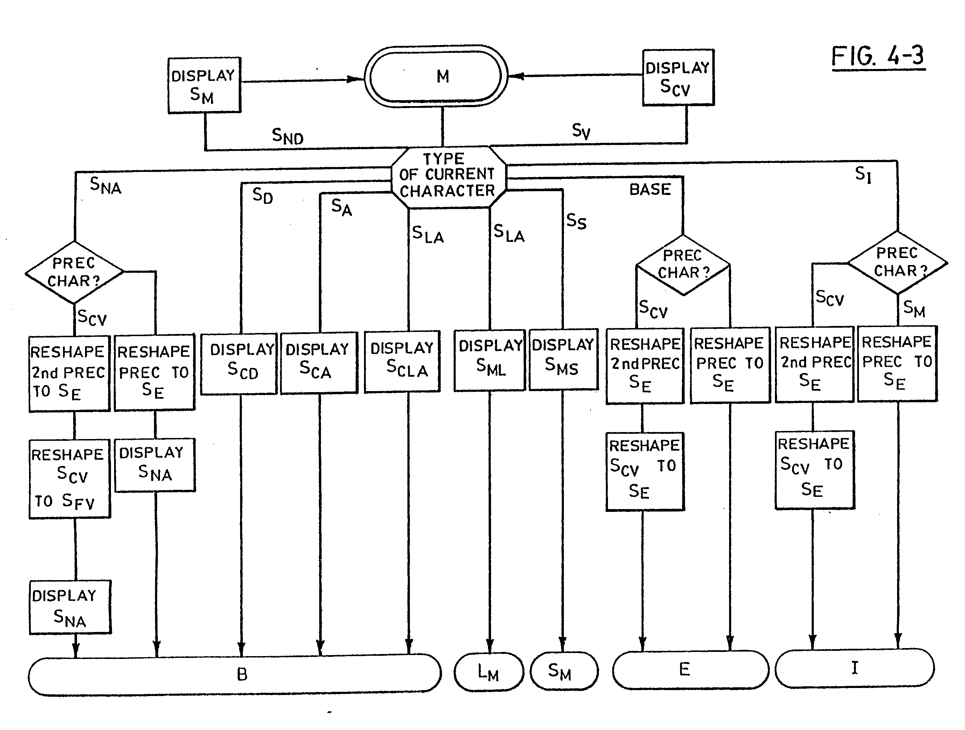

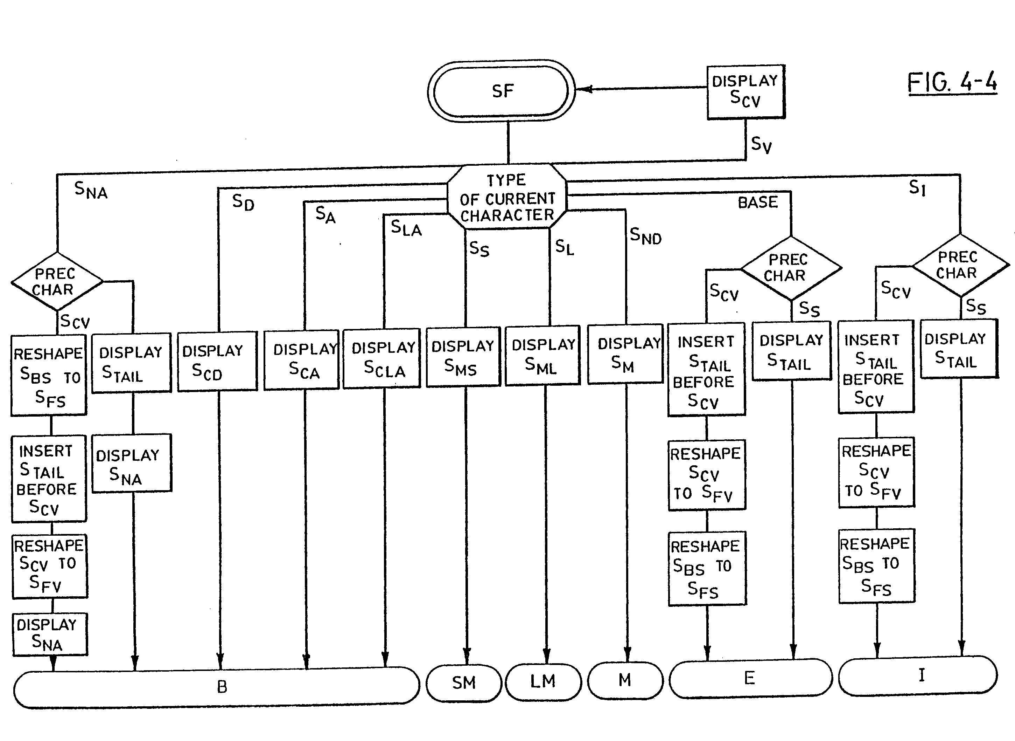

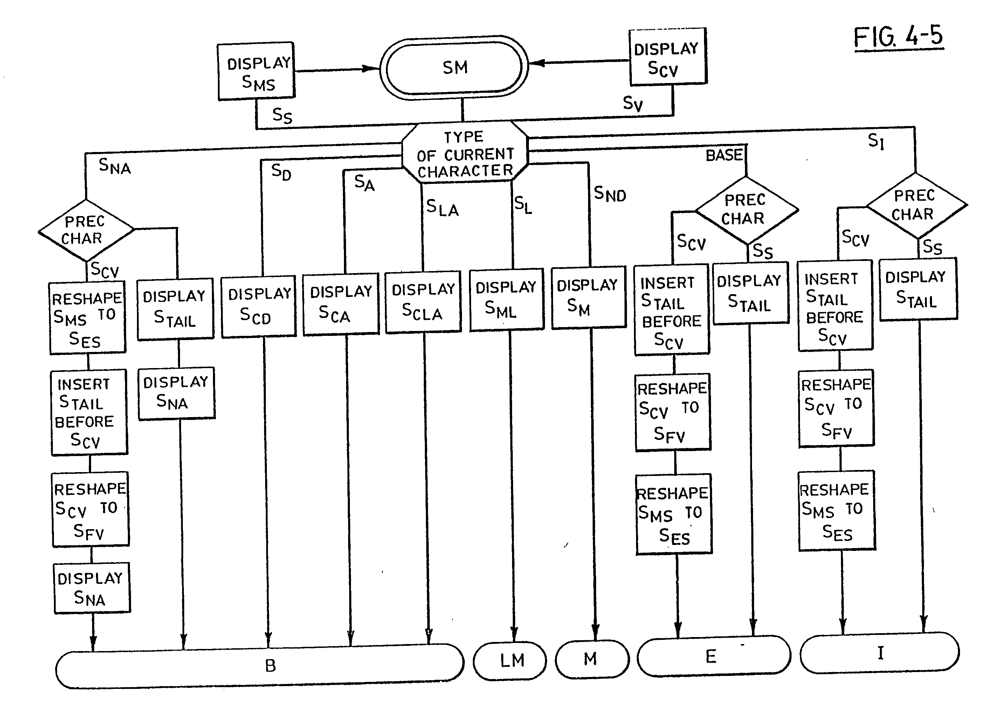

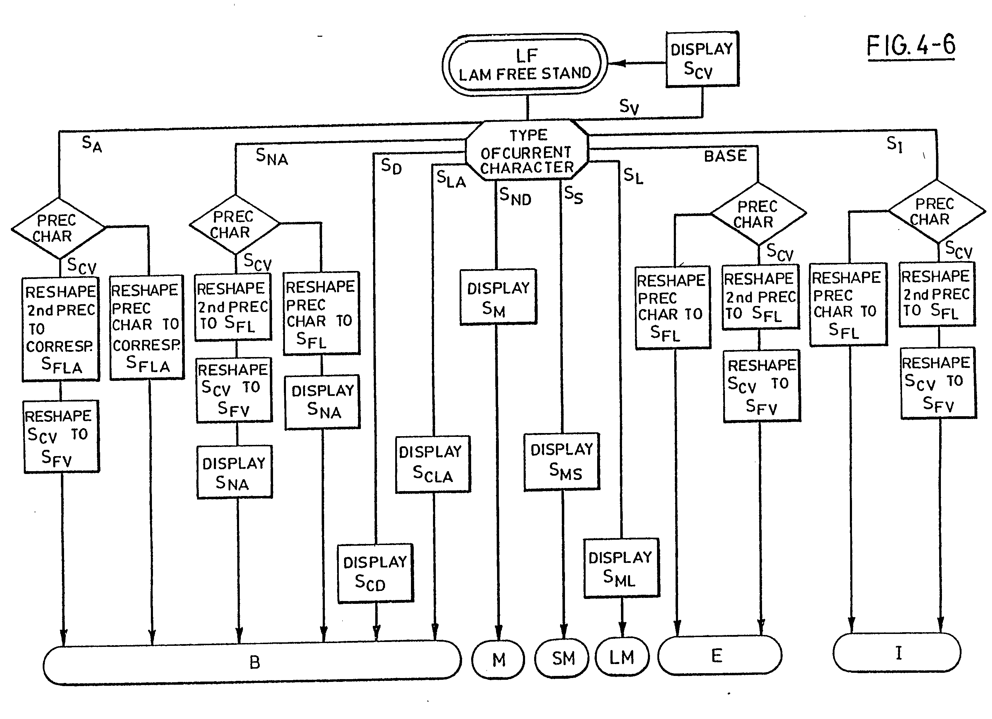

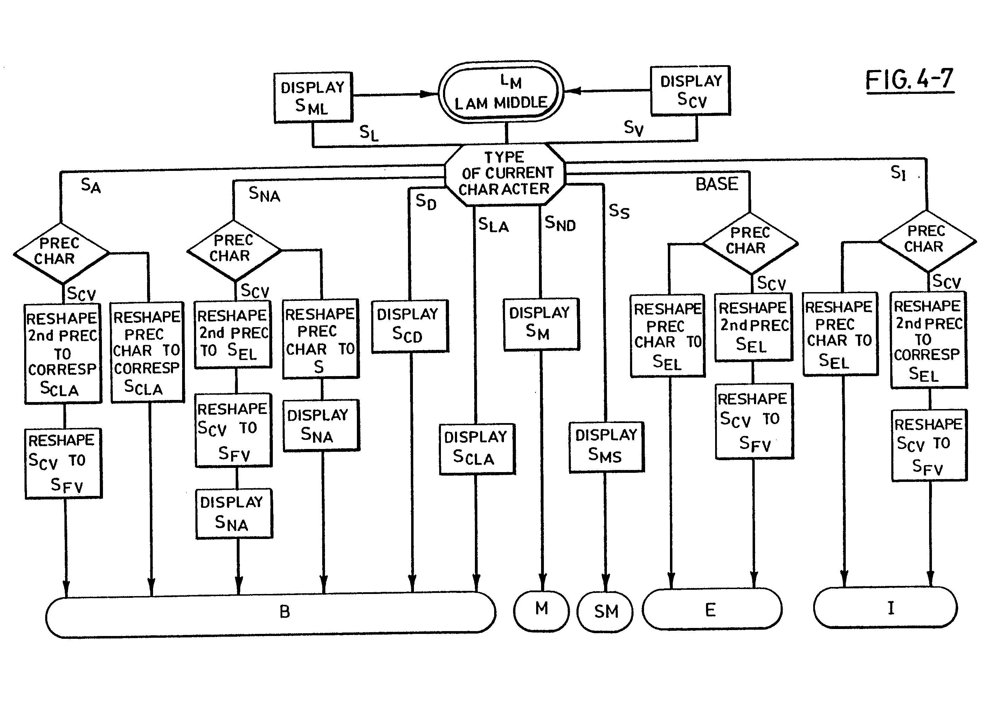

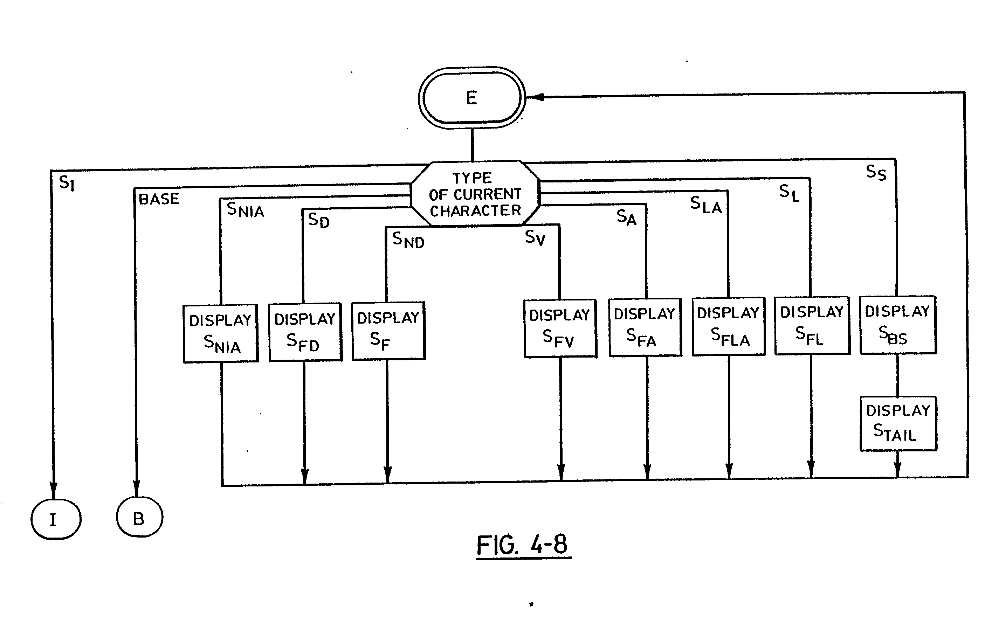

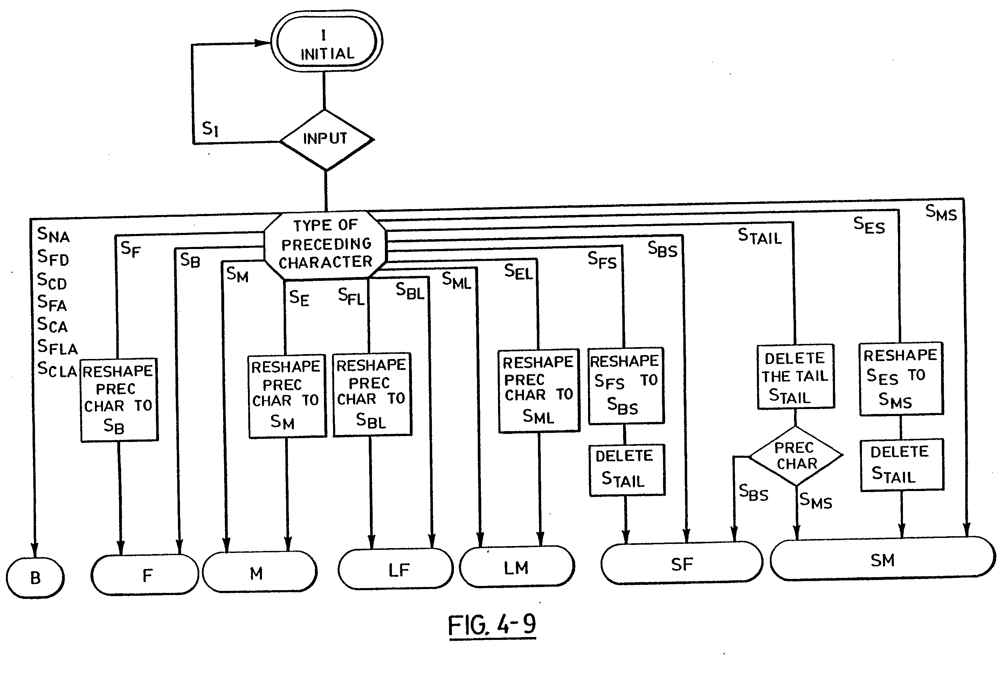

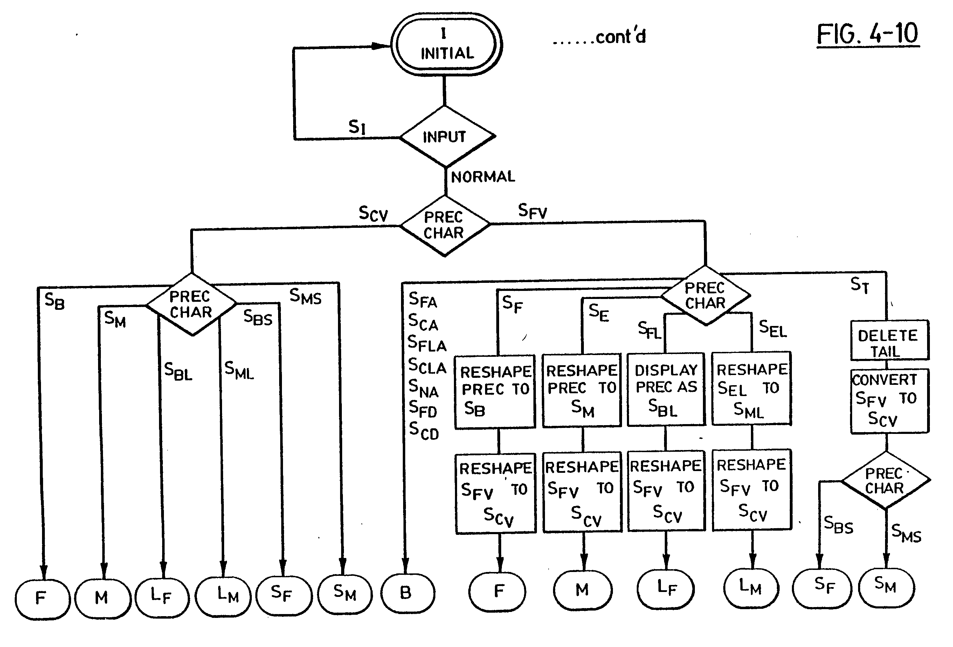

To add these four states to the finite state machine of Fig. 7 will produce a complex diagram. Thus, reference is made instead to Figs. 4—1 to 4—7 for a clearer understanding of the operation of the finite state machine that produces the script of all those levels of operation.

For example, Fig. 4—1 shows the operations of the finite state machine when it is in the beginning-of-part state and receiving the different types of input characters. The operations are explained in terms of the processing done on the input character (output) and the new position in the word (state transition).

From these figures, it can be easily understood that this algorithm is not checking preceding characters, nor re-shaping them unless at end of a word. This in turn results in better human factors and performance than systems heretofore available.

Appendix B shows several examples of the script generated by this implementation. The examples cover both the general and the special cases as well as the vowels.

It is not believed necessary to elaborate further on the collective Figs. 4, since those skilled in this art will readily appreciate the operations illustrated thereby.

Basic Function Key

In order to be able to produce initials and acronyms in Arabic, a function key, designated BASE, and a new state, termed E, must be added. The function of the BASE key is to enable the generation of adjacent stand-alone shapes of the Arabic characters. When the BASE key is depressed, the Finite State machine switches to the "E" state. All subsequent Arabic characters including $S_S$ will be shaped in their stand-alone shape until the BASE key is depressed again. Fig. 4—8 shows the operations of the Finite State machine when it switches to the "E" state. While in this state, the rules relating to LAM—ALEF will be suspended.

Delete/Insert/Replace

The Finite State machine memorizes the position in the word (i.e., the state) and uses memorized positions for acting on the input characters. In a text editing application, and even in a normal DP environment, the memory of that Finite State machine may be lost in cases such as:

(i) using the backspace (delete key)

(ii) moving the cursor to another position on the screen

(iii) end the editing function, . . ., etc.

In order to re-initialize the Finite State machine memory and continue the operation in the new position, the machine has to check the preceding character(s). (In the special case of Rules 7, 8, 9 and 10 (supra), two preceding characters have to be checked). However, since changing the editing position is not the general case during editing of the text, then the present system still conforms to its objectives of minimizing the need for checking preceding characters.

An additional state, termed "I", is added to the Finite State machine, and it is to this state that the machine will switch when its memory is lost. It will stay in this state until an "editable" character is keyed. At this time, the machine will re-initialize its memory by checking preceding characters. This will make the Finite State machine switch to one of the previously defined states.

The handling of insertion/deletion/replacement of characters inside words is done by first re-initializing Finite Machine memory and then through the "I" state (if memory is lost). Secondly, the same operations described before will be performed. The difference is that instead of processing characters coming from the keyboard, the machine will re-shape characters already available in the buffer (as succeeding characters). The re-shaping of the succeeding characters will be performed until the end of the part where the insertion/replacement/deletion took place.

Implementation

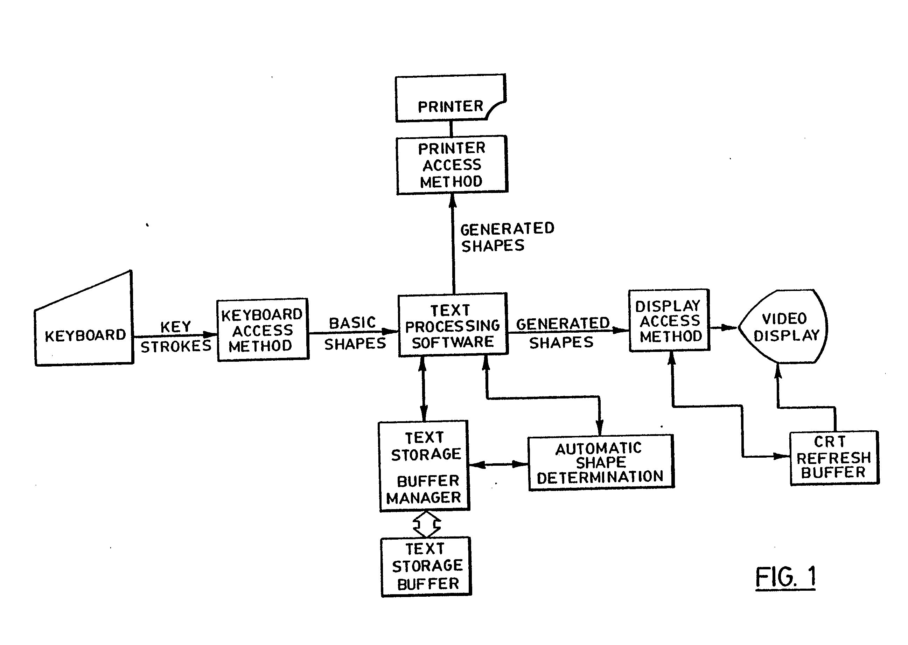

The procedure described above has been implemented in an IBM* Displaywriter (* Registered Trade Marks), a text processing machine. The system as implemented is outlined by the block diagram of Fig. 1, and is explained below.

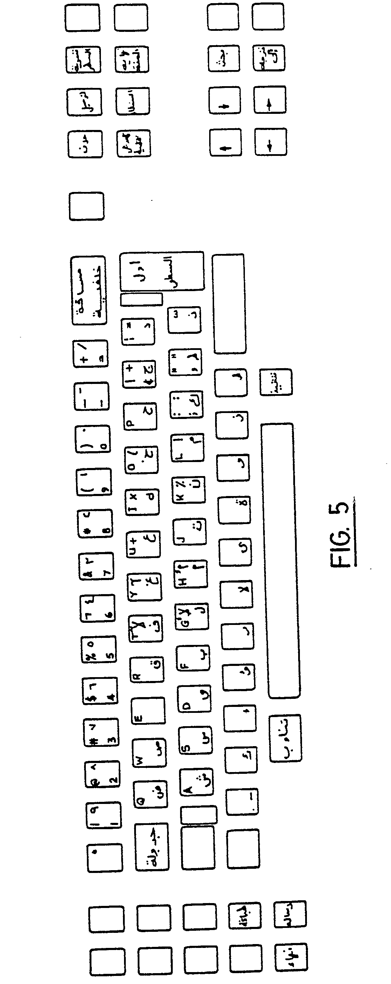

1. The keyboard has the basic shapes of the characters and also the vowels. The keyboard layout is shown in Fig. 5. The procedure is not, of course, restricted to a specific layout.

2. The output of the keyboard is initiated by key strokes (scan codes) and the Keyboard Access Method (KAM) processes the scan codes to produce EBCDIC standard codes for the basic Arabic shapes. These codes are shown circled in Appendix A.

3. These Arabic basic shapes are processed by the text processing software up to the point where it is ready to be stored in the text processing buffer.

4. The "Automatic Shape Determination" block represents the logic of the algorithm. The input of that block is EBCDIC codes of the basic shapes of the characters. The output is the EBCDIC codes of the generated shapes. These are all the Arabic codes shown in Appendix A, including the circled basic shapes. Implementing the procedure in the Displaywriter is mainly done by following the character classifications, and the Finite State machine operations described before.

Appendix C shows how the Arabic shapes of the IBM Displaywriter are assigned to the groups defined by the algorithm.

Every class has been given a hex code. For example, hex 05 for $S_F$, hex 06 for $S_{CA}$, . . ., etc. These hex codes are stored in a table of 256 entries. So by simple indexing, the EBCDIC code of the character can point to the entry in that table that has the value of its class. Once the class number is known, and the state of the finite state machine is known, then one of the flow charts of Figs. 4—1 to 4—10 would be followed to process this character.

In order to find the corresponding shape for one of the input or preceding characters, the following technique is followed:

a. Each class is represented by an array in the memory.

b. Each array will have a number of entries equal to the number of characters in this class.

c. The entry of a character is its EBCDIC code.

d. Entries are stored so that the different shapes of a character have the same relative position from the start of their table (e.g., the second entry in $S_{BS}$ table will have the beginning-of-part shape of the character and its stand-alone shape is the second entry in the $S_{FS}$ table).

e. To find the corresponding shape of an input character, search in the stand-alone table until the character is located and determines its relative position in this table. Thus, the corresponding shapes can be retrieved simply by indexing to the same relative position in the corresponding table.

Once the corresponding shape is found, the automatic shape determination algorithm will pass it to the text storage buffer manager which will insert that shape in the text storage buffer.

The automatic shape determination will return control to the text processing software which will instruct the display access method to update the display on the video screen (which has a bilingual character generator). At that moment, the operator will see the correct shape on the screen.

The shaping/reshaping of characters takes place during the editing time. Once this operation is done, the generated shapes (readable script) are stored on diskette. Thus, subsequent display or printing does not require any access to the automatic shape determination facilities.

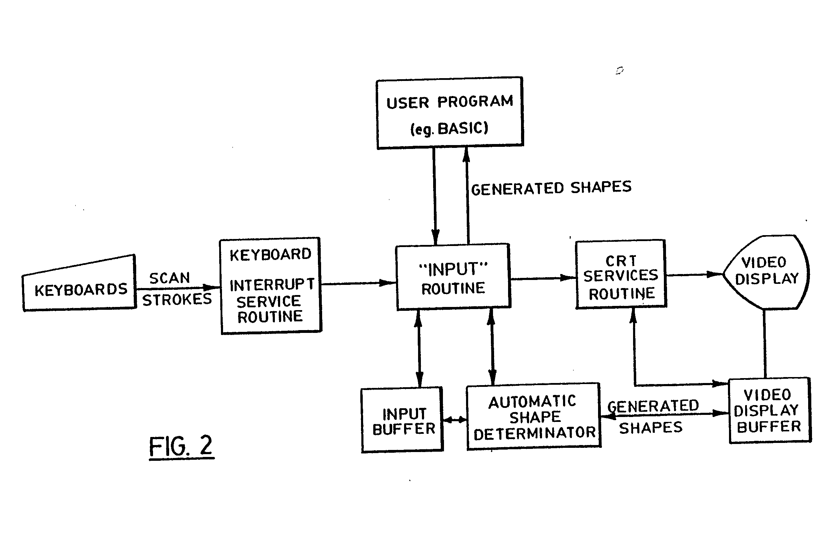

This invention can also be implemented in a personal computer, e.g., the IBM Personal Computer, as suggested by Fig. 2. In this case, the "INPUT" routine of the programming language must be modified/ replaced to access the algorithm. The block diagram of Fig. 2 shows the suggested implementation and the required interfaces.

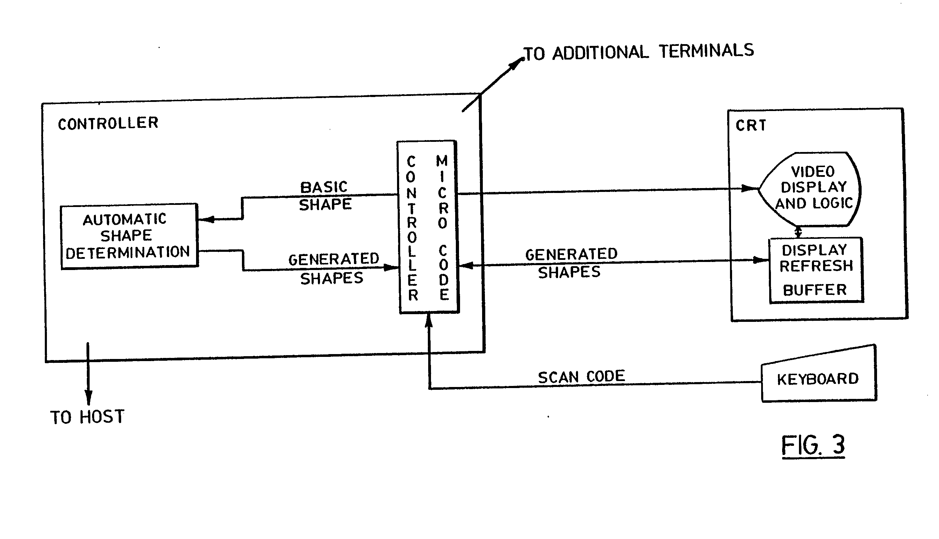

Fig. 3 illustrates the implementation of the invention in a data processing environment. A number of terminals with Arabic character generators can be attached to a terminal controller which will have standard circuitry and logic. The logic of the controller should interface to the algorithm for shaping the input characters. The controller, however, should maintain a different Finite State machine for each of the terminals.

A fourth way to implement this invention would be in the provision of a chip in the H/W circuit of a CRT.

Further Implementation Improvement

It is noted that the IBM Displaywriter is using some of the shapes in different positions in the word without affecting the readability or the acceptance of the generated script. In this machine (see Appendix C), many of the shapes in $S_{BND}$ are used also as $S_{MND}$.

This can potentially lead to enhancement to the above discussed implementation. The classes of Appendix C can be further subdivided into smaller sets, while maintaining the characteristics of the original class. This subdividing would be done depending on the number and types of shapes supported for each character.

Appendix D shows this further subdividing as done for the character set on the IBM Displaywriter.

This process, of course, will require the elimination of several shaping/reshaping operators of the flowcharts of Figs. 4—1 to 4—10, whcih will make the processing even faster. As an example of this elimination, Fig. 4—4 and Fig. 4—5 may be replaced by any of them. $S_F$ will be equivalent to $S_M$ since $S_{FS}$ is the same as $S_{ES}$. Also, the characters of some groups such as $S_{FND}$ and $S_{FD}$ will have to be shaped/reshaped because they have only one shape.

It must be noted that this further improvement is feasible and is provided by the nature of the process described herein. However, it is machine dependable.

## APPENDIX A

### ARABIC CHARACTER SET WITH CODE POINTS

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | | | | | | | | ح | ش | ظ | غ | ك | ؛ | ؟ | X | |
| 1 | | | | | | أ | | خ | | | ل | | | | | |
| 2 | | | | | ئ | ؤ | ئـ | خـ | | | لآ | | | | | |
| 3 | | | | | ؟ | أٔ | ت | د | | | لآ | | | | | |
| 4 | | | | | ا | لأ | ذ | ت | | | لأ | | | | | |
| 5 | | | | | ـ | ك | ت | ر | | | لأ | | | | | |
| 6 | | | | | ع | أ | ث | ز | | | لآ | | | | | |
| 7 | | | | | آ | ل | ج | س | | | لأ | | | | | |
| 8 | | | | | آ | ب | ج | س | | | لا | | | | | |
| 9 | | | | | أ | بـ | ح | | | | ل | | | | | |
| A | | | | | ش | ع | غ | ل | ى | ا | | | | | | |
| B | | | | | ص | ع | ف | م | ه | ى | ٦ | | | | | |
| C | | | | | ص | د | ف | م | | ى | ٧ | | | | | |
| D | | | | | ض | غ | ق | ن | ؤ | ي | ٣ | ٨ | | | | |
| E | | | | | مذ | غ | ق | ذ | | بـ | ٤ | ٩ | | | | |
| F | | | | | ط | خ | ك | د | و | ♦ | ٥ | | | | | |

# EP 0 129 060 B1

APPENDIX B-1

| KEYED CHAR. | CURRENT STATE | NEXT STATE | CHARACTERS AS DISPLAYED AND REDISPLAYED ON CRT |
|---|---|---|---|
| ج | B | F | ح |
| م | F | M | جم |
| ا | M | B | جــا |
| ل | B | LF | جــال |
| ﻪ | LF | B | جــال ﻪ |
| | | | |
| م | B | F | م |
| و | F | B | مو |
| س | B | SF | موس |
| و | SF | B | موسو |
| س | B | SF | موسو س |
| ﻪ | SF | B | موسو س ﻪ |
| | | | |
| ع | B | F | ﻋ |
| ﻪ | F | B | ﻋ ﻪ |
| | | | |

11

APPENDIX B-2

| KEYED CHAR. | CURRENT STATE | NEXT STATE | CHARACTERS AS DISPLAYED AND REDISPLAYED ON CRT |
|---|---|---|---|
| آ | B | B | آ |
| ل | B | LF | لآ |
| ا | LF | B | لاآ |
| م | B | F | ملاآ |
| ٹ | F | B | ٹ ملاآ |
|  |  |  |  |
|  |  |  |  |

APPENDIX B-3

| KEYED CHAR. | CURRENT STATE | NEXT STATE | CHARACTERS AS DISPLAYED AND REDISPLAYED ON CRT |
|---|---|---|---|
| ع | B | F | ـع |
| ـب | F | M | عب |
| ع | M | M | عبـع |
| ـب | M | M | عبعب |
| ع | M | M | عبعبع |
| ط | M | B | عبعبع |
| | | | |
| | | | |
| ة | B | F | ه |
| ي | F | M | هي |
| ة | M | M | هيف |
| ي | M | M | هيفي |
| ا | M | B | هيفيا |
| | | | |
| | | | |
| | | | |

EP 0 129 060 B1

APPENDIX B-4

| KEYED CHAR. | CURRENT STATE | NEXT STATE | CHARACTERS AS DISPLAYED AND REDISPLAYED ON CRT |
|---|---|---|---|
| چ | B | F | ج |
| ´ | F | F | جـٔ |
| م | F | M | جـٔـم |
| ´ | M | M | جـٔـمـٔ |
| ا | M | B | جـٔـمـٔـا |
| ل | B | LF | جـٔـمـٔـال |
| ؤ | LF | LF | جـٔـمـٔـالؤ |
| ط | LF | B | جـٔـمـٔـالؤ ط |
| — | — | — | |
| ش | B | SF | ش |
| ´ | SF | SF | شـٔ |
| م | SF | M | شـٔـم |
| ۳ | M | SM | شـٔـمـ |
| ؤ | SM | SM | شـٔـمـسؤ |
| ط | SM | B | شـٔـمـس ؤ ط |

14

APPENDIX B-5

| KEYED CHAR. | CURRENT STATE | NEXT STATE | CHARACTERS AS DISPLAYED AND REDISPLAYED ON CRT |
|---|---|---|---|
| ١ | B | B | ا |
| لا | B | B | الا |
| ش | B | B | الاش |
| ١ | B | B | ا |
| ل | B | LF | ال |
| ش | LF | LF | الش |
| ١ | LF | B | الاش |
| ١ | B | B | ا |
| ل | B | LF | ال |
| ش | LF | LF | الش |
| ذ | LF | B | الشذ |
| ي | B | F | الشذي |
| ى | F | B | الشذي |

## APPENDIX C

|  | 1 | 1 | 2 | 2 | 2 | 2 | 2 | 2 | 1 | 1 | 4 | 4 | 2 | 2 | 2 | 2 | 2 | 3 | 3 |

$S_{FND}$ = (‐ ـ ب ت ت ج ح خ ط ظ غ ف ق ك م ن ه ي)

$S_{BND}$ = (‐ ـ ب ت ت ج ح خ ظ ظ ع ف ق ك ـ ن ه ي)

$S_{MND}$ = (‐ ـ ب ت ت ج ح خ ط ظ ع ف ق ك ـ ن ج ي)

$S_{END}$ = (‐ ـ ب ت ت ج ح خ ظ ج ف ق ك م ن ه ي)

$S_{FD}$ = (ؤ ة د ذ ر ز و ى)

$S_{CD}$ = (ؤ ة د ذ ر ز و ى)

$S_{FL}$ = (ل)

$S_{BL}$ = (ل)

$S_{ML}$ = (ل)

$S_{EL}$ = (ل)

$S_{FA}$ = (ا إ أ آ)

$S_{CA}$ = (ـا ـإ ـأ ـآ)

$S_{FLA}$ = (لا لأ لإ لآ)

$S_{CLA}$ = (ـلا ـلأ ـلإ ـلآ)

$S_{BS}$ = (س ش ص ض)

$S_{MS}$ = (ـس ـش ـص ـض)

$S_{FS}$ = (س ش ص ض)

$S_{ES}$ = (س ش ص ض)

$S_{FV}$ = (ّ)

$S_{CV}$ = (ّ)

$S_{TAIL}$ = (ـ)

$S_{NA}$ = (A-Z, 0-9, .-9, spec. character, s)

APPENDIX D

**4 shapes/character**

$$S^5_{FND} = (\ \dot{\varepsilon}\ \varepsilon\ )$$
$$S^5_{BND} = (\ \dot{\varepsilon}\ \varepsilon\ )$$
$$S^5_{MND} = (\ \dot{\varepsilon}\ \varepsilon\ )$$
$$S^5_{END} = (\ \dot{\varepsilon}\ \varepsilon\ )$$

**3 shapes/character**

$$S^4_{FND} = (\ ه\ )$$
$$S^4_{BND} = (\ ه\ )$$
$$S^4_{MND} = (\ ه\ )$$

**3 shapes/character**

$$S^3_{FND} = (\ ي\ )$$
$$S^3_{BND} = (\ ي\ )$$
$$S^3_{END} = (\ ي\ )$$

**2 shapes/character**

$$S^2_{FND} = (\ ن\ م\ ك\ ق\ ف\ خ\ ح\ ج\ ث\ ت\ ب\ ) \quad = \quad S_{END}$$
$$S^2_{BND} = (\ ن\ م\ ك\ ق\ ف\ خ\ ح\ ج\ ث\ ت\ ب\ ) \quad = \quad S_{MND}$$

**1 shape/character**

$$S^1_{FND} = (\ أ\ ظ\ ط\ —\ ) = S_{BND} = S_{MND} = S_{END}$$

---

$$S_{FA} = (\ آ\ أ\ إ\ ا\ )$$
$$S_{FD} = (\ ؤ\ ة\ د\ ذ\ ر\ ز\ و\ ) = S_{CD} \qquad S_{CA} = (\ آ\ أ\ إ\ ا\ )$$
$$S_{FLA} = (\ لآ\ لأ\ لإ\ لا\ )$$
$$S_{FD} = (\ ى\ ) \qquad\qquad S_{CLA} = (\ لا\ لأ\ لإ\ لا\ )$$
$$S_{CD} = (\ ى\ )$$

---

$$S_{BS} = (\ س\ ش\ ص\ ض\ ) = S_{MS} \qquad S_{FV} = (\ ّ\ )$$
$$S_{FS} = (\ س\ ش\ ر\ ض\ ) = S_{ES} \qquad S_{CV} = (\ ّ\ )$$

---

$$S_{TAIL} = (\ ل\ ) \qquad\qquad S_{FL} = (\ ل\ ) = S_{EL}$$
$$S_{NA} = (A\text{-}z,\ 0\text{-}9,\ .\ \text{-}9,\ spec.\ char.,s) \quad S_{BL} = (\ لـ\ ) = S_{ML}$$

17

# EP 0 129 060 B1

**Claims**

1. A method of automatically generating characters for display or printing in cursive script for a context sensitive language wherein various characters may each have a number of different shapes depending upon the particular character location within a word or part of a word comprising generating a class code for each successive selected character, each class code being representative of the connectability or non-connectability of its associated character to a succeeding character, characterised in that said method further comprises generating an output code identifying a predicted shape for a current selected character which is dependent upon the class codes for the current selected character and its immediately preceding character, and, upon generating a class code representing a word delimiter where necessary to comply with the context sensitivity of the language, changing the output code identifying the predicted shape of the preceding character into an output code identifying the shape of the last character of a word.

2. A method according to Claim 1, wherein each generated class code constitutes an input to an invoked state of a plurality of states in a finite state machine, each said input effectively producing: (a) an output identifying a predicted character shape for a current selected character, and (b) a decision to retain or change the invoked states for processing the next successive character class code.

3. A method according to Claim 2 wherein said plurality of states includes three states nominally identified as a beginning-of-word-state, a medial state, and a free-standing state, each state being comprised of a sub-routine responsive to the input of a character class code to direct an appropriate output character class code and to determine the state to be used in processing the next successive character class code, such that the plurality of states effectively memorizes current position in a word being processed.

4. A method according to Claim 3, further including a state capable of being invoked by a basic function key-initiated signal to direct the selection and production of initials and acronyms in successive free-standing shapes.

5. A method according to Claim 3 or 4, further includes an initializing state operative to re-initialize the finite-state machine memory subsequent to memory loss due to text editing functions by checking preceding characters retained in buffer storage.

6. A method according to Claim 3, 4 or 5, wherein the characters are classified into three basic classes, namely, connectable characters, non-connectable characters and vowels.

7. A method according to Claim 6, wherein the basic class defining connectable characters is sub-divided to provide character class codes for shapes used at the beginning of a word, the middle of a word, the end of a word, and free-standing.

8. A method according to Claim 6 or 7, wherein the basic class defining non-connectable characters is sub-divided to provide class codes for special free-standing character shapes as used in multi-part words.

9. A method according to Claim 8, wherein the basic class for vowels is sub-divided to define both free-standing and connectable vowel shapes.

10. A method according to Claim 9, further including character classes to define compound character shapes, and special end-of-word character shapes.

**Patentansprüche**

1. Verfahren zum automatischen Erzeugen von Buchstaben zur Anzeige oder zum Druck in Kurrentschrift für eine kontextempfindliche Sprache, in welcher verschiedene Buchstaben jeweils eine Anzahl von verschiedenen Formen aufweisen können, die von dem speziellen Buchstabenort innerhalb eines Wortes oder eines Teiles eines Wortes abhängen, das die Erzeugung eines Gruppenschlüssels für jeden nacheinander ausgewählten Buchstaben umfaßt, wobei jeder Gruppenschlüssel die Verknüpfbarkeit oder Unverknüpfbarkeit seines zugeordneten Buchstabens zu einem nachfolgenden Buchstaben kenntlich macht, dadurch gekennzeichnet, daß das besagte Verfahren als Verfahrensschritte ferner aufweist, Erzeugen eines Ausgangscodes, der eine verhergesagte Form für den gerade ausgewählten Buchstaben erkennt, die von den Gruppenschlüssen des gerade ausgewählten Buchstabens und des diesem unmittelbar vorausgehenden Buchstabens abhängt, und, nach dem Erzeugen eines einen Wortabgrenzer darstellenden Gruppenschlüssels, dort, wo es wegen der Vorschriften der kontextempfindlichen Sprache erforderlich ist, das Verändern des Ausgangscodes, der die vorhergesagte Form des vorausgehenden Buchstabens kenntlich macht, in einen Ausgangscode, der die Form des letzten Buchstabens eines Wortes kenntlich macht.

2. Verfahren nach Anspruch 1, bei dem jeder erzeugte Gruppenschlüssel eine Eingabe zu einem aufgerufenen Zustand von einer Vielzahl von Zuständen in einem endlichen Automaten bildet, wobei jede Eingabe wirksam erzeugt: (a) eine Ausgabe, die eine vorhergesagte Buchstabenform für einen gerade ausgewahlten Buchstaben kenntlich macht, und (b) eine Entscheidung, die aufgerufenen Zustände zur Verarbeitung des nächstfolgenden Buchstabengruppenschlüssels zu behalten oder zu ändern.

3. Verfahren nach Anspruch 2, bei dem die Vielzahl der Zustände drei Zustände einschließt, die namentlich mit Wortanfangs-Zustand, mit Mitte-Zustand, und mit Alleinstehend-Zustand bezeichnet werden, wobei jeder Zustand aus einer Unterroutine besteht, die auf die Eingabe eines Buchstabengruppenschlüssels antwortet, un einen entsprechenden Ausgabebuchstabengruppenschlüssel anzuweisen und den Zustand zu bestimmen, der zur Verarbeitung des nächstfolgenden

18

Buchstabengruppenschlüssels benutzt werden soll, so daß die Vielzahl der Zustände wirksam die augenblickliche Position in einem gerade bearbeiteten Wort festhält.

4. Verfahren nach Anspruch 3, das weiterhin einen Zustand umfaßt, der von einem durch eine Basisfunktionentaste ausgelösten Signal aufgerufen werden kann, um die Auswahl und die Erstellung von Initialen und Acronymen in aufeinanderfolgenden alleinstehenden Formen steuern.

5. Verfahren nach Anspruch 3 oder 4, das weiterhin einen Initialisierungszustand umfaßt, der die Reinitialisierung des Speichers des endlichen Automaten infolge eines Speicherinhaltsverlustes aufgrund von Textbearbeitungsfunktionen bewirkt, indem vorausgehende im Zwischenspeicher aufbewahrte Buchstaben geprüft werden.

6. Verfahren nach Anspruch 3, 4 oder 5, bei dem die Buchstaben in drei Basisklassen eingeteilt sind, namentlich verknüpfbare Buchstaben, unverknüpfbare Buchstaben und Vokale.

7. Verfahren nach Anspruch 6, bei dem die Basisklasse, die verknüpfbare Buchstaben bezeichnet, unterteilt ist, um Buchstabengruppenschlüssel für Formen zu liefern, die am Anfang eines Wortes, in der Mitte eines Wortes, am Ende eines Wortes und freistehend benutzt werden.

8. Verfahren nach Anspruch 6 oder 7, bei dem die Basisklasse, die unverknüpfbare Buchstaben bezeichnet, unterteilt ist, um Gruppenschlüssel für spezielle freistehende Buchstabenformen zu liefern, wie sie in mehrteiligen Wörtern benutzt werden.

9. Verfahren nach Anspruch 8, bei dem die Basisklasse für Vokale unterteilt ist, um sowohl freistehende als auch verknüpfbare Vokalformen zu kennzeichnen.

10. Verfahren nach Anspruch 9, das weiterhin Buchstabengruppen umfaßt, um zusammengesetzte Buchstabenformen und spezielle Wortende-Buchstabenformen zu bezeichnen.

**Revendications**

1. Procédé de génération automatique de caractères pour affichage ou impression en écriture cursive, pour un langue sensible au contexte dans laquelle divers caractères peuvent avoir chacun un certain nombre de formes différentes selon la position particulière du caractère à l'intérieur d'un mot ou d'une partie de mot, comprenant la génération d'un code de classe pour chaque caractère choisi succesif, chaque code de classe étant représentatif de la connectabilité ou de la non connectabilité de son caractère associé à un caractère suivant, caractérisé en ce que ledit procédé comprend en outre: la génération d'un code de sortie identifiant une forme prévue pour un caractère choisi en cours, qui dépend des codes de classe pour le caractère choisi en cours et pour son caractère qui le précède immédiatement, et, lors de la génération d'un code de classe représentant un délimiteur de mot où il est nécessaire de tenir compte de la sensibilité de la langue au contexte, le changement du code de sortie identifiant la forme prévue du caractère précédent en un code de sortie identifiant la forme du dernier caractère d'un mot.

2. Procédé suivant la revendication 1, dans lequel chaque code de classe généré constitue une entrée à un état demandé d'une pluralité d'états dans un machine à nombre fini d'états, chaque dite entrée produisant effectivement: (a) une sortie identifiant une forme de caractère prévue pour un caractère choisi en cours, et (b) une décision pour conserver ou modifier les états appelés pour le traitement du code de classe de caractère succesif suivant.

3. Procédé suivant la revendication 2, dans lequel ladite pluralité d'états comprend trois états nominalement identifiés comme un état de début de mot, un état de milieu de mot et un état indépendant, a chaque état étant constitué d'un sous-programme qui répond à l'entrée d'un code de classe de caractère pour diriger un code de classe de caractère de sortie approprié et pour déterminer l'état à utiliser dans le traitement du code de classe de caractère successif suivant, de sorte que la pluralité d'états mémorise effectivement la position en cours dans un mot traité.

4. Procédé suivant la revendication 3, comprenant en outre un état qui peut être appelé par un signal de fonction de base déclenché par touche pour diriger la sélection et la production d'initiales et d'acronymes dans des formes indépendantes successives.

5. Procédé suivant la revendication 3 ou 4, comprenant en outre en état d'initialisation agissant pour réinitialiser la mémoire de la machine à nombre fini d'états après une perte de mémoire due à des fonctions d'édition de texte, par vérification des caractères précédents conservés en mèmoire tampon.

6. Procédé suivant la revendication 3, 4 ou 5, dans lequel les caractères sont classés en trois classes de base, à savoir caractères connectables, caractères non connectables, et voyelles.

7. Procédé suivant la revendication 6, dans lequel la classe de base définissant les caractères connectables est subdivisée pour fournir des codes de classe de caractère pour des formes utilisées au début d'un mot, au milieu d'un mot, à la fin d'un mot, et de façon indépendante.

8. Procédé suivant la revendication 6 ou 7, dans lequel la classe de base définissant le caractères non connectables est subdivisée de manière à fournir des codes de classe pour des formes de caractère indépendant spéciales, utilisées dans des mots composés.

9. Procédé suivant la revendication 8, dans lequel la classe de base pour les voyelles est subdivisée de manière à définir des formes de voyelle autonome et de voyelle connectable.

10. Procédé suivant la revendication 9, comprenant en outre des classes de caractère pour définir des formes de caractère combinées et des formes de caractère de fin de mot spéciales.

FIG. 1

FIG. 2

FIG. 3

FIG. 4-1

EP 0 129 060 B1

FIG. 4-2

DISPLAY $S_{CV}$

F
FREE STANDING

TYPE
OF CURRENT
CHARACTER

$S_S$

$S_{NA}$

$S_D$

$S_A$

$S_L$

BASE

$S_I$

$S_{LA}$

$S_{ND}$

PREC
CHAR ?

$S_{CV}$

PREC
CHAR ?

$S_{CV}$

PREC
CHAR ?

$S_{CV}$

DISPLAY $S_{MS}$

RESHAPE 2nd PREC AS $S_F$

RESHAPE 2nd PREC TO $S_{SF}$

DISPLAY $S_{CA}$

DISPLAY $S_M$

DISPLAY $S_{ML}$

RESHAPE PREC TO $S_F$

RESHAPE PREC TO $S_F$

RESHAPE VOWEL AS $S_{FV}$

DISPLAY $S_{CD}$

DISPLAY $S_{CLA}$

RESHAPE 2nd PREC TO $S_F$

RESHAPE 2nd PREC TO $S_F$

DISPLAY $S_{NA}$

RESHAPE $S_{CV}$ TO $S_{FV}$

RESHAPE VOWEL AS $S_{FV}$

DISPLAY $S_{NA}$

SM

B

M

LM

E

I

EP 0 129 060 B1

FIG. 4-3

FIG. 4-4

EP 0 129 060 B1

FIG. 4-5

FIG. 4-6

EP 0 129 060 B1

LF
LAM FREE STAND

DISPLAY
$S_{CV}$

$S_V$

TYPE OF CURRENT CHARACTER

$S_A$

$S_{NA}$

$S_D$

$S_{LA}$

$S_{ND}$

$S_S$

$S_L$

BASE

$S_I$

PREC CHAR

$S_{CV}$

RESHAPE 2nd PREC TO CORRESP. $S_{FLA}$

RESHAPE PREC CHAR TO CORRESP. $S_{FLA}$

RESHAPE $S_{CV}$ TO $S_{FV}$

PREC CHAR

$S_{CV}$

RESHAPE 2nd PREC TO $S_{FL}$

RESHAPE $S_{CV}$ TO $S_{FV}$

DISPLAY $S_{NA}$

RESHAPE PREC CHAR TO $S_{FL}$

DISPLAY $S_{NA}$

DISPLAY $S_{CD}$

DISPLAY $S_{CLA}$

DISPLAY $S_M$

DISPLAY $S_{MS}$

DISPLAY $S_{ML}$

RESHAPE PREC CHAR TO $S_{FL}$

PREC CHAR

$S_{CV}$

RESHAPE 2nd PREC TO $S_{FL}$

RESHAPE $S_{CV}$ TO $S_{FV}$

RESHAPE PREC CHAR TO $S_{FL}$

PREC CHAR

$S_{CV}$

RESHAPE 2nd PREC TO $S_{FL}$

RESHAPE $S_{CV}$ TO $S_{FV}$

B

M

SM

LM

E

I

FIG. 4-7

EP 0 129 060 B1

TYPE OF CURRENT CHARACTER

E

$S_S$

$S_L$

$S_{LA}$

$S_A$

$S_V$

$S_{ND}$

$S_D$

$S_{NIA}$

BASE

$S_I$

DISPLAY $S_{BS}$

DISPLAY $S_{TAIL}$

DISPLAY $S_{FL}$

DISPLAY $S_{FLA}$

DISPLAY $S_{FA}$

DISPLAY $S_{FV}$

DISPLAY $S_F$

DISPLAY $S_{FD}$

DISPLAY $S_{NIA}$

B

I

FIG. 4-8

FIG. 4-9

FIG. 4-10

......cont'd

EP 0 129 060 B1

FIG. 5

EP 0 129 060 B1

EXAMPLE 1

| $S_{FV}$ | $S_{FND}$ | $S_{FV}$ | $S_{CD}$ | $\cdots$ | $S_{CV}$ | $S_{MND}$ | $S_{CV}$ | $S_{BND}$ |

$P_F$  $P_{EP}$  $P_M$  $P_B$

EXAMPLE 2

| $S_{FV}$ | $S_{END}$ | $\cdots$ | $S_{MND}$ | $S_{CV}$ | $S_{BND}$ | $S_{FV}$ | $S_{FD}$ | $S_{FV}$ | $S_{CD}$ | $\cdots$ | $S_{CV}$ | $S_{MND}$ | $S_{CV}$ | $S_{BND}$ |

$P_{EW}$  $P_M$  $P_B$  $P_P$  $P_{EP}$  $P_M$  $P_B$

FIG. 6

$$Del \equiv ANY\ WORD\ DELIMITER$$

FIG. 7

WITH VOWEL

WITHOUT VOWEL

FIG. 8